# EUROPEAN PATENT SPECIFICATION

(11) **EP 4 008 614 B1**
(45) Date of publication and mention of the grant of the patent: **24.07.2024**
(21) Application number: 20306503.2
(22) Date of filing: 04.12.2020
(51) Int. Cl.: B62D 35/00, B62D 37/02

(54) **SPOILER FOR A VEHICLE COMPRISING A MOVABLE BLADE**
SPOILER FÜR EIN FAHRZEUG MIT EINEM BEWEGLICHEN FLÜGEL
DÉFLECTEUR POUR UN VÉHICULE COMPRENANT UNE AUBE MOBILE

(43) Date of publication of application: 08.06.2022
(73) Proprietor: Compagnie Plastic Omnium SE, 69007 Lyon (FR); SUSPA GmbH, 90518 Altdorf (DE)
(72) Inventor: JUILLARD, Pierre, 01150 Sainte-Julie (FR); FLAMANT, Jean-Luc, 01150 Sainte-Julie (FR); GAREL, Thierry, 01150 Sainte-Julie (FR); GEISS, Michael, 90475 Nürnberg (DE); HOLLERBAUM, Bernd, 95473 Creussen (DE)
(74) Representative: LLR

(56) References cited:
- FR-A1- 3 064 584
- JP-A- 2010 143 522
- US-A1- 2020 114 986
- US-B1- 10 099 730

## Description

The invention relates to the automotive field, in particular to a rear spoiler for an automotive vehicle allowing the modulation of the aerodynamic properties of the vehicle.

Some automotive vehicles include an aerodynamic blade integrated in a rear spoiler in order to reduce the drag of the vehicle. Indeed, the aerodynamic blade is an extension of the roof of the vehicle in the rear portion of this latter and allows, when the vehicle is in motion, to push back the vortices formed by an airflow leaving the roof as far as possible from the vehicle. Those vortices are less able to exert a restraining force on the vehicle because they are further from the vehicle. Some other spoilers are movable in rotation in order to increase the down force of the vehicle.

It is possible to reduce the drag of the vehicle using a movable aerodynamic blade.

Following this purpose, the mobile aerodynamic blade can be deployed and retracted in function of the vehicle speed. In other words, when the vehicle is moving at reduced speed, there is no need to deploy the aerodynamic blade which is thus retracted in the rear spoiler. When the vehicle reaches a speed greater than a specified threshold value, the aerodynamic blade is deployed in order to reduce the drag as explained above.

With this latter kind of spoilers, there is gap between the blade and a main body of the spoiler when the blade is in the retracted position, in the extended position or when the blade is moving between the retracted and the extended position. Because of this gap, there is a risk of damaging the main body of the spoiler and/or the blade by unwanted contacts between those two components. These contacts are due, for example, to the vibrations of the blade caused by the vibrations of the vehicle when said vehicle is used. Moreover, the movement of the blade with respect to the main body of the spoiler is performed according to an effective angle which is different from the theoretical target angle due to some degree of variability in the manufacturing of the spoiler which increase the risk of contacts between the blade and the main body of the spoiler, which contact may cause damage to either the blade or the main body. A solution to this problem has been to manually adjust the gaps and flushes of the spoiler during the manufacturing of the spoiler. However, this solution is very complex to implement and is not compatible with a production at an industrial scale. In particular, the need for manual adjustments is time-consuming and necessitate the action of an operator and multiple tests in order to get to the desired configuration. Moreover, an access to an adjustment system for adjusting the position of the blade with respect to the main body has to be provided. However, it is not always possible to provide such an access due to the required compactness of the spoiler.

Document US 10 099 730 describes a rear spoiler for a vehicle according to the preamble of claim 1.

The aim of the invention is to provide a rear spoiler for an automotive vehicle overcoming the issues listed above.

The invention consists in a rear spoiler for a vehicle according to claim 1.

Thus, the positioning means, by limiting the movement of the blade, reduce the risk that the blade damages the main body of the spoiler and/or damages itself by moving in the at least one direction when the blade is in the retracted position and/or in the extended position and/or during a movement of the blade between the retracted and the extended position. Moreover, by limiting the movement of the blade in the at least one direction, the positioning means guide the blade during its movement between the retracted and the extended position. Therefore, for example, the undesirable consequences of the vibration of the vehicle are reduced.

The invention has the advantage that the relation between the main body and the blade is more direct through the positioning means. Indeed, for the guiding of the blade, there is no need to conform the geometry of the blade to, for example, a geometry of a kinematic system. Possible misalignment in the spoiler system, due to defect on part geometry of the main body or the blade can be corrected by directly working on the part geometry itself, either by reworking the molds used to produce the part, or by adjusting geometry references integrated in assembly means. Previously, it was required that the blade conforms to the geometry of the kinematic system, so that the adjustments made between the kinematic system and the spoiler could impact position and geometry of the blade.

By a movement of the blade between the retracted and the extended position it is meant a movement of the blade from the retracted to the extended position or a movement of the blade from the extended to the retracted position.

The rear spoiler according to the invention can also comprise at least one of the following features:
- the rear spoiler further comprises a kinematic system fixed to the main body and to the blade, wherein the kinematic system is configured to move the blade between the retracted position and the extended position;
- the direction is a vertical direction with respect to the spoiler;
- the direction is a horizontal direction with respect to the spoiler;
- the positioning means comprise a slider made in a material able to cushion a contact between the blade and the main body;
- the slider is made in velvet;
- the positioning means comprise a slider made in a material able to ease a sliding of the blade on the main body, for example the slider is made of polyoxymethylene;
- at least a part of the positioning means is fixed on the blade;
- at least a part of the positioning means is fixed on the main body;
- the slider is fixed on a protrusion of the main body;
- the positioning means are configured to face an inferior and a superior face of the blade; and
- the positioning means are located near to the opening of the main body.

The invention also concerns a vehicle comprising a rear spoiler as described above.

The invention will be described in details below. This description is given only as an example and using the attached drawings in which:
Figure 1 is a cross-sectional view of a part of the spoiler according to the invention.
Figure 2 is a horizontal sectional view of a part of the spoiler of figure 1.
Figure 3 is a cross-sectional view of a part of the spoiler of figure 1 wherein the main body of the spoiler is not shown.
Figure 4 is a rear view of a vehicle according to the invention equipped with the rear spoiler of figure 1.

In the detailed description, the longitudinal direction (or axis) X, the transversal direction (or axis) Y and the vertical direction (or axis Z) make reference to the conventional directions of an automotive vehicle and are illustrated on the figures.

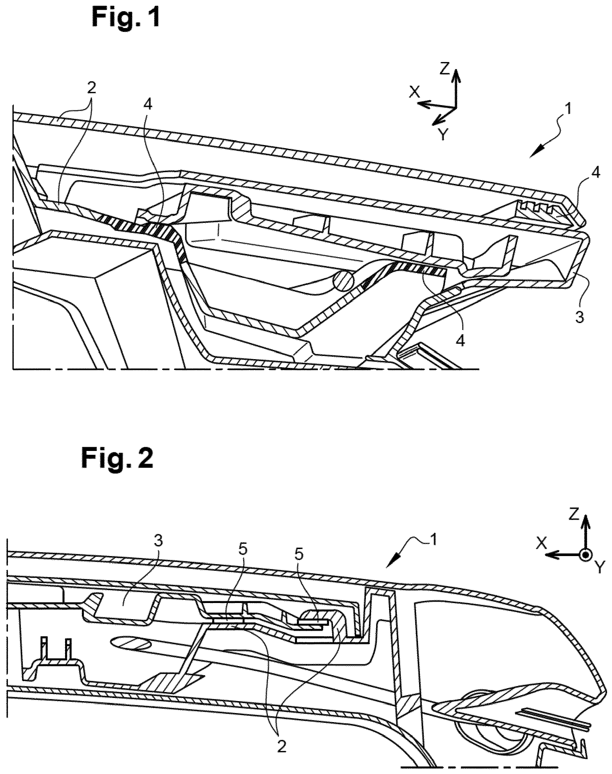

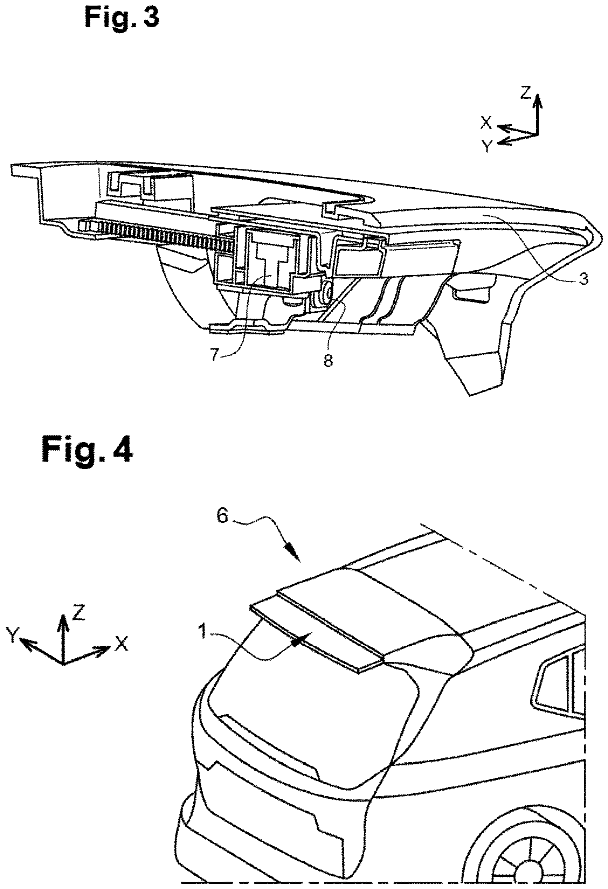

Figures 1 and 2 show a rear spoiler 1 for an automotive vehicle 6 according to an embodiment of the invention. When mounted on a vehicle 6, the spoiler 1 is fixed on the roof or the tailgate of the vehicle 6 (see figure 4).

The spoiler 1 comprises a main body 2 which corresponds to the frame of the spoiler 1. The main body 2 has an elongated form and has a length which is sensibly equal to the width of the roof or the tailgate on which it is mounted. The main body 2 defines a cavity and comprises an elongated opening. Inside the cavity, there are, among other elements not described here, a blade 3, a kinematic system 7 (not shown on figures 1 and 2, shown on figure 3), and positioning means 4, 5.

The blade 3 is movably mounted between a retracted position inside the cavity defined by the main body 2 and an extended position wherein at least a part of the blade 3 is outside of the cavity and through the opening of the main body 2. The blade 3 moves between the retracted and the extended position according to a translational movement along axis X.

The kinematic system 7 is fixed to the main body 2 and to the blade 3 and is configured to move the blade 3 between the retracted position and the extended position. The kinematic system 7 comprises means for moving the blade 3 between the two positions and to maintain it in the retracted or extended positions. The blade 3 has an elongated form and a length which is slightly inferior to a length of the opening of the main body 2.

The spoiler 1 comprises two types of positioning means 4, 5. The first type of positioning means 4, also called punctual positioning means 4, are shown on figure 1 and the second type of positioning means 5, also called continuous positioning means 5 are shown on figure 2. Thus, in the present embodiment, the spoiler 1 comprises the two types of positioning means 4, 5. In other embodiments, it may be provided that the spoiler 1 comprises only one type of positioning means, either punctual 4 or continuous 5.

Here, the punctual positioning means 4 are configured to cushion a contact between the blade 3 and the main body 2 of the spoiler 1 when the blade 3 is in the retracted position or in the extended position. In the present case, the punctual positioning means 4 comprise sliders made in velvet which are fixed on protrusions of the main body 2.

Most of the contact interfaces between the blade 3 and the main body 2 are located at the location of the punctual positioning means 4. Some of the punctual positioning means 4 face an inferior face of the blade 3 and others 4 face a superior face of the blade 3. In this configuration, the punctual positioning means 4 limit a movement of the blade 3 in a vertical direction (along axis Z) with respect to the spoiler 1 both in the up and down direction. Moreover, the velvet of the punctual positioning means 4 has a roughness which allows to also limit a movement of the blade 3 with respect to the spoiler in a horizontal direction (along axis Y) when the blade 3 is in contact with the punctual positioning means 4. As shown on figure 1, two of the punctual positioning means 4 are located near the opening of the main body 2. It is particularly advantageous because the position of the blade 3 with respect to the main body 2 in this area is critical. Indeed, the blade 3 move from the retracted position to the extended position with an effective angle which may differs from a theorical target angle due to a certain degree of variability during the manufacture of the spoiler 1, and, particularly, due to the attachment between the kinematic system 7 and the blade 3. Thus, there is a risk that an interference happens at this location between the blade 3 and the main body 2, in particular during a movement of the blade 3. The punctual positioning means 4 limit the vertical movement of the blade 3 (along axis Z) and thus allow to have an effective angle which is close to the theorical target angle and avoid interferences between the blade 3 and the main body 2, and thus avoid damaging one of those two components.

In other embodiments, it may be provided that the punctual positioning means 4 are fixed on the blade 3 and not the main body 2 or that some of them are fixed on the blade 3 and others are fixed on the main body 2. It may also be provided that the punctual positioning means 4 are made in any other material able to cushion a contact between the blade 3 and the main body 2, and, preferably, of which the roughness allows to limit a movement of the blade 3 also in a horizontal direction (along axis Y) with respect to the spoiler 1.

During the assembly of the spoiler 1, the kinematic system 7 is first attached with attaching means, for example attachment screws 8, to the blade 3 with some degrees of freedom. Then, the kinematic system 7 and the blade 3 are introduced inside the main body 2 and the kinematic system 7 is fixed to the main body 2. Because of the degrees of freedom in the attachment between the kinematic system 7 and the blade 3, the punctual positioning means 4 allow the blade 3 to be well positioned with respect to the kinematic system 7 and the main body 2 without need for a manual adjusting. Then, attaching means are tighten, for example by screwing the attachment screws 8, in order to reduce or remove the degrees of freedom in the attachment. This has the advantage that the geometry of the blade 3 is not totally dependent on the geometry of the kinematic and that the position of the blade 3 is automatically adjusted during the assembly of the kinematic system 7 and the blade 3 in the main body 2. Advantageously, the blade 3 has a stiffness which is sufficient for the blade 3 not to be deformed by the positioning means but instead moved by said positioning means.

The continuous positioning means 5 comprise sliders which have an elongated form in the direction of movement of the blade 3 (along axis X). The sliders are made in a material able to ease a sliding of the blade on the main body. Thus, the sliders facilitate the movement of the blade 3 between the retracted and the extended position. The sliders of the continuous positioning means 5 are configured to limit a movement of the blade 3 in the horizontal direction with respect to the spoiler 1 (along axis Y) during a movement of the blade 3 between the retracted and extended position. It has the advantage that it guides the movement of the blade 3 and reduce the risk that a lateral portion of the blade 3 comes into contact with a lateral portion of the main body 2 and causes damages. The sliders of the continuous positioning means 5, by reducing friction at the interface between the blade 3 and the main body 2, reduce the risk of damages caused by such friction. In the present embodiment, the sliders of the continuous positioning means 5 are located near the lateral sides of the opening of the main body 2 in order to guide the blade 3 in a critical location in terms of risks of damages.

During a movement of the blade 3 on the main body 2 of the spoiler 1, the blade 3 slides on the sliders of the continuous positioning means 5 which means that the sliders also limit a movement of the blade 3 in a vertical direction with respect to the spoiler 1 (along axis Z) which improves the guiding function of the continuous positioning means 5.

In the present case, the sliders of the continuous positioning means 5 are made in polyoxymethylene (also called POM). It may be provided that the sliders are made in any other material able to ease a sliding of the blade 3 on the main body 1, and, preferably, to limit a movement of the blade 3 in the horizontal direction with respect to the spoiler 1 (along axis Y).

In the present embodiment, the continuous positioning means 5 are fixed on the main body 2 of the spoiler 1 and face the inferior face of the blade 3. It may be provided that the continuous positioning means 5 are fixed on the blade 3 and not the main body 2 or that some of them are fixed on the blade 3 and others are fixed on the main body 2. It may also be provided that the spoiler 1 comprises positioning means 5 which face the superior face of the blade 3.

When the vehicle 6 is not in function or when it is driven at low speed, the blade 3 is in the retracted position as shown in figure 1. In this state, the blade 3 lays on the punctual positioning means 4 which limit the movement of the blade 3 in the vertical (axis Z) and horizontal (axis Y) direction as mentioned before and which cushion the vibration of the blade 3 due to the vibration of the vehicle 6.

When the use of the aerodynamic properties of the spoiler 1 is wanted, the movement of the blade 3 from the retracted to the extended position is commanded either manually by the driver or automatically thanks to an integrated program. During the movement of the blade 3, said blade 3 is guided by the continuous positioning means 5 which limit its movements in the horizontal (axis Y) and vertical (axis Z) directions with respect to the spoiler 1 and which ease its sliding.

Once the most possible extended position has been reached, the blade 3 lays again on punctual positioning means 4 which may be part, for some of them, of the punctual positioning means 4 on which the blade 3 lays in the retracted position.

By limiting the movement of the blade 3 with respect to the spoiler 1 in the horizontal and vertical direction, the punctual and continuous positioning means 4, 5 improve the gap and flush between the static main body 2 of the spoiler 1 and the movable blade 3 which reduce the risk of damages caused by contact between those two parts. Moreover, the guiding of the blade 3 is obtained by a direct interaction between the blade 3 and the main body 2 and thus is not dependent on a third part such as the kinematic system. Hence, the guiding is easier to control and adjust on an industrial scale than when one must adjust the kinematic system in order to adjust the gap and flush between the blade 3 and the main body 2.

The invention is not limited to the present embodiment.

### List of references

1: rear spoiler
2: main body of the spoiler
3: blade of the spoiler
4: punctual positioning means
5: continuous positioning means
6: automotive vehicle
7: kinematic system
8: attachment screws

## Claims

1. A rear spoiler (1) for a vehicle (6), comprising:
- a main body (2) defining a cavity and comprising an opening,
- a blade (3) movably mounted between a retracted position inside the cavity and an extended position wherein at least a part of the blade (3) is outside of the cavity and through the opening, and
- positioning means (4, 5) configured to limit a movement of the blade (3) with respect to the spoiler (1) in at least one direction when the blade (3) is in the retracted position and/or in the extended position and/or during a movement of the blade (3) between the retracted and extended position,
**characterized in that** the positioning means (4) are further configured to cushion a contact between the blade (3) and the main body (2).

2. The spoiler (1) according to claim 1, further comprising a kinematic system (7) fixed to the main body (2) and to the blade (3), wherein the kinematic system (7) is configured to move the blade (3) between the retracted position and the extended position.

3. The spoiler (1) according to claim 1 or 2, wherein the direction is a vertical direction with respect to the spoiler (1).

4. The spoiler (1) according to any one of claims 1 to 3, wherein the direction is a horizontal direction with respect to the spoiler (1).

5. The spoiler (1) according to any one of the preceding claims, wherein the positioning means (4) comprise a slider made in a material able to cushion a contact between the blade (3) and the main body (2).

6. The spoiler (1) according to any one of the preceding claims, wherein the slider (4) is made in velvet.

7. The spoiler (1) according any one of the preceding claims, wherein the positioning means (5) comprise a slider made in a material able to ease a sliding of the blade (3) on the main body (2), for example the slider is made of polyoxymethylene.

8. The spoiler (1) according to any one of the preceding claims, wherein at least a part of the positioning means is fixed on the blade.

9. The spoiler (1) according to any one of the preceding claims, wherein at least a part of the positioning means (4, 5) is fixed on the main body.

10. The spoiler (1) according to any one of claims 5 to 7 and claim 9, wherein the slider is fixed on a protrusion of the main body (2).

11. The spoiler (1) according to any one of the preceding claims, wherein the positioning means (4) are configured to face an inferior and a superior face of the blade (3).

12. The spoiler (1) according to any one of the preceding claims, wherein the positioning means (4, 5) are located near to the opening of the main body (2).

13. A vehicle (6) comprising a rear spoiler (1) according to any one of the preceding claims.

## Patentansprüche

1. Heckspoiler (1) für ein Fahrzeug (6), aufweisend:
- einen Hauptkörper (2), der einen Hohlraum definiert und eine Öffnung aufweist,
- einen Flügel (3), der zwischen einer eingezogenen Position innerhalb des Hohlraums und einer ausgefahrenen Position, in der sich mindestens ein Teil des Flügels (3) außerhalb des Hohlraums und durch die Öffnung hindurch befindet, beweglich angebracht ist, und
- Positionierungsmittel (4, 5), die konfiguriert sind, eine Bewegung des Flügels (3) in Bezug auf den Spoiler (1) in mindestens einer Richtung zu begrenzen, wenn sich der Flügel (3) in der eingezogenen Position und/oder in der ausgefahrenen Position befindet und/oder sich während einer Bewegung des Flügels (3) zwischen der eingezogenen und der ausgefahrenen Position befindet,
**dadurch gekennzeichnet, dass** die Positionierungsmittel (4) ferner konfiguriert sind, einen Kontakt zwischen dem Flügel (3) und dem Hauptkörper (2) zu dämpfen.

2. Spoiler (1) nach Anspruch 1, der ferner ein kinematisches System (7) aufweist, das an dem Hauptkörper (2) und an dem Flügel (3) befestigt ist, wobei das kinematische System (7) konfiguriert ist, den Flügel (3) zwischen der eingezogenen Position und der ausgefahrenen Position zu bewegen.

3. Spoiler (1) nach Anspruch 1 oder 2, wobei die Richtung eine vertikale Richtung in Bezug auf den Spoiler (1) ist.

4. Spoiler (1) nach einem der Ansprüche 1 bis 3, wobei die Richtung eine horizontale Richtung in Bezug auf den Spoiler (1) ist.

5. Spoiler (1) nach einem der vorhergehenden Ansprüche, wobei die Positionierungsmittel (4) einen Schieber aus einem Material aufweisen, das dazu fähig ist, einen Kontakt zwischen dem Flügel (3) und dem Hauptkörper (2) zu dämpfen.

6. Spoiler (1) nach einem der vorhergehenden Ansprüche, wobei der Schieber (4) aus Samt besteht.

7. Spoiler (1) nach einem der vorhergehenden Ansprüche, wobei die Positionierungsmittel (5) einen Schieber aus einem Material aufweisen, das dazu fähig ist, ein Gleiten des Flügels (3) auf dem Hauptkörper (2) zu erleichtern, z.B. ist der Schieber aus Polyoxymethylen hergestellt.

8. Spoiler (1) nach einem der vorhergehenden Ansprüche, wobei zumindest ein Teil der Positionierungsmittel an dem Flügel befestigt ist.

9. Spoiler (1) nach einem der vorhergehenden Ansprüche, wobei zumindest ein Teil der Positionierungsmittel (4, 5) am Hauptkörper befestigt ist.

10. Spoiler (1) nach einem der Ansprüche 5 bis 7 und nach Anspruch 9, wobei der Schieber an einem Vorsprung des Hauptkörpers (2) befestigt ist.

11. Spoiler (1) nach einem der vorhergehenden Ansprüche, wobei die Positionierungsmittel (4) so konfiguriert sind, dass sie einer unteren und einer oberen Fläche des Flügels (3) zugewandt sind.

12. Spoiler (1) nach einem der vorhergehenden Ansprüche, wobei die Positionierungsmittel (4, 5) in der Nähe der Öffnung des Hauptkörpers (2) angeordnet sind.

13. Fahrzeug (6) mit einem Heckspoiler (1) nach einem der vorhergehenden Ansprüche.

## Revendications

1. Becquet arrière (1) pour un véhicule (6), comprenant :
- un corps principal (2) définissant une cavité et comprenant une ouverture,
- une lame (3) montée mobile entre une position rétractée à l'intérieur de la cavité et une position déployée dans laquelle au moins une partie de la lame (3) est à l'extérieur de la cavité et à travers l'ouverture, et
- des moyens de positionnement (4, 5) configurés pour limiter un mouvement de la lame (3) par rapport au becquet (1) dans au moins une direction lorsque la lame (3) est en position rétractée et/ou en position déployée et/ou lors d'un mouvement de la lame (3) entre la position rétractée et la position déployée,
**caractérisé en ce que** les moyens de positionnement (4) sont en outre configurés pour amortir un contact entre la lame (3) et le corps principal (2).

2. Becquet (1) selon la revendication 1, comprenant en outre un système cinématique (7) fixé au corps principal (2) et à la lame (3), dans lequel le système cinématique (7) est configuré pour déplacer la lame (3) entre la position rétractée et la position déployée.

3. Becquet (1) selon la revendication 1 ou 2, dans lequel la direction est une direction verticale par rapport au becquet (1).

4. Becquet (1) selon l'une quelconque des revendications 1 à 3, dans lequel la direction est une direction horizontale par rapport au becquet (1).

5. Becquet (1) selon l'une quelconque des revendications précédentes, dans lequel les moyens de positionnement (4) comprennent un patin réalisé dans un matériau capable d'amortir un contact entre la lame (3) et le corps principal (2).

6. Becquet (1) selon l'une quelconque des revendications précédentes, dans lequel le patin (4) est réalisé en velours.

7. Becquet (1) selon l'une quelconque des revendications précédentes, dans lequel les moyens de positionnement (5) comprennent un patin réalisé dans un matériau capable de faciliter le glissement de la lame (3) sur le corps principal (2), par exemple le patin est réalisé en polyoxyméthylène.

8. Becquet (1) selon l'une quelconque des revendications précédentes, dans lequel au moins une partie des moyens de positionnement est fixée sur la lame.

9. Becquet (1) selon l'une quelconque des revendications précédentes, dans lequel au moins une partie des moyens de positionnement (4, 5) est fixée sur le corps principal.

10. Becquet (1) selon l'une quelconque des revendications 5 à 7 et 9, dans lequel le patin est fixé sur une saillie du corps principal (2).

11. Becquet (1) selon l'une quelconque des revendications précédentes, dans lequel les moyens de positionnement (4) sont configurés pour être en regard d'une face inférieure et d'une face supérieure de la lame (3).

12. Becquet (1) selon l'une quelconque des revendications précédentes, dans lequel les moyens de positionnement (4, 5) sont situés près de l'ouverture du corps principal (2).

13. Véhicule (6) comprenant un becquet arrière (1) selon l'une quelconque des revendications précédentes.
